# EUROPEAN PATENT APPLICATION

(11) **EP 4 803 424 A1**
(43) Date of publication of application: **09.09.2026**
(21) Application number: 26156205.2
(22) Date of filing: 04.02.2026
(51) Int. Cl.: B64U 10/14, B64U 30/26, B64U 50/19, B64U 60/50, H02G 1/02, B64U 70/83

(54) **AIRCRAFT**

(30) Priority: 23.09.2025 PL 13300425 U
(71) Applicant: Kozuba, Jaroslaw, 05-300 Minsk Mazowiecki (PL); Zaklad Uslugowo Handlowy Instalatorstwo I Artykuly Elektryczne Wisniewski Nidzica Sp. z o. o., 05-850 Ozarow Mazowiecki (PL)
(72) Inventor: Kozuba, Jaroslaw, 05-300 Minsk Mazowiecki (PL)
(74) Representative: AOMB Polska Sp. z.o.o.

(57) **Abstract**

Aircraft in a multi-rotor configuration, comprises at least four propulsion systems (1) mounted on the upper side of an aircraft structure (2), a power supply system (3) in the lower part of the structure (2), and a control system (4) connected by wire to the power supply system (3) and by communication with the propulsion systems (2), wherein the structure (2) comprises at least two skids (5) on the underside, characterized in that the aircraft comprises a platform (6) attached to the structure (2) on one side, wherein the platform (6) comprises a railing (7) led around the edge of the platform (6), and furthermore, each propulsion system (1) comprises two electric motors (8) arranged one above the other and each electric motor (8) is connected to a propeller (9), and the electric motors (8) with the propellers (9) are mounted in ducts (10).

## Description

### Subject of the invention, technical field and industrial application

The subject of the invention is an aircraft in a multi-rotor configuration, comprises at least four propulsion systems mounted on the upper side of an aircraft structure, a power supply system in the lower part of the structure, and a control system connected by wire to the power supply system and by communication with the propulsion systems, wherein the structure comprises at least two skids on the underside. The aircraft according to the invention may be used, in particular, in the power industry for service and assembly work on high-voltage lines.

### State of the art

The state of the art includes methods for conducting work related to the maintenance of overhead power lines with the voltage off, as well as work performed under voltage, so-called "on a potential" From an invention perspective, the possibility of carrying out work "on a potential " without causing interruptions in energy supply, and therefore unnoticeable to the end user or energy producer, is interesting.

Various methods are used for the described work, depending on the class of transmission line. At low voltages, this work is performed using properly insulated tools, equipment, and properly prepared materials. At high voltages, the distance from the line to the ground is significant (up to 100 meters). Such work is complicated by the aforementioned height and the correspondingly high voltage (hundreds of kilovolts), which significantly hinders the performance of this type of work when operating from the ground using, for example, forklifts.

Therefore, helicopters are commonly used for this type of work as a flying platform for assembly workers. Work performed in this manner requires the entire helicopter to "access the potential" of the line, allowing certain operations to be performed safely.

In the state of the art, the use of drones/robots for certain works on overhead lines is common, but they are mainly limited to inspection works. From the Chinese utility model CN210744604U it is known an inspection robot walking along a high-voltage power grid belongs to the field of high-altitude operation robots. The robot can realize automatic inspection. The opening and closing mechanism, the transmission mechanism and the detection mechanism are all arranged on the machine body. From the international application WO2015180576A1 it is known a live working robot for a high-voltage power transmission line comprises a machine body, two working mechanical arms with five degrees of freedom, two telescopic arms, a tail-end apparatus, an auxiliary mechanical arm with six degrees of freedom, and a robot monitoring system. An upper end of each telescopic arm is provided with a travelling wheel mechanism, an equal-potential wheel, and a power transmission line clamping jaw. From the US patent US12353222B2 there are known an unmanned aerial vehicles (UAVs) for infrastructure surveillance and monitoring. One example includes monitoring power grid components such as high voltage power lines. The UAVs may coordinate, for example using swarm behavior, and be controlled via a platform system. Other embodiments are described and claimed.

In the presented solutions, robots/drones are used for a very narrow range of simple tasks, mainly to carry out visual or thermal inspections aimed at assessing the condition of individual elements of the transmission line.

### The technical problem and the purpose of the invention

In solutions known in the state of the art for servicing and installing high-voltage lines, there is lack of devices that would allow for effective and ergonomic access to high-voltage lines, that would be economically and energy-efficient in themselves (unlike, for example, carrying out such work using a helicopter), that would be safe and would enable the work of both power engineers and employees responsible for operating the device.

The purpose of the invention is to develop a device that will solve the technical problems related to the above-mentioned shortcomings in the solutions known in the state of the art.

### The essence of the invention and its advantageous features

The essence of the invention is an aircraft in a multi-rotor configuration, comprises at least four propulsion systems mounted on the upper side of an aircraft structure, a power supply system in the lower part of the structure, and a control system connected by wire to the power supply system and by communication with the propulsion systems, wherein the structure comprises at least two skids on the underside, characterized in that the aircraft comprises a platform attached to the structure on one side, wherein the platform comprises a railing led around the edge of the platform, and furthermore, each propulsion system comprises two electric motors arranged one above the other and each electric motor is connected to a propeller, and the electric motors with the propellers are mounted in tunnels, wherein the electric motors are connected by wire to the power supply system, and furthermore, the power supply system comprises at least one electric battery, wherein a work socket is mounted on the railing and connected by wire to the power supply system and by communication with the control system, and the diameter of the propellers is at least 100 cm, the spacing of the propulsion systems is at least 250 cm, the width of the platform is at least 250 cm, the depth of the platform is at least 100 cm, and the weight of the power supply system is at least 200 kg.

Preferably, in at least one of the propulsion system, the upper electric motor is co-rotating with the lower electric motor.

Other benefits are obtained, if in at least one of the propulsion system, the upper electric motor is counter-rotating to the lower electric motor.

In a possible embodiment of the invention the structure is made of the composite materials known in the state of the art.

Preferably, a parachute known in the state of the art is centrally mounted in the upper part of the structure, and the canopy size of the parachute is selected in relation to the entire mass of the aircraft in such a way that after its deployment, the parachute enables the aircraft to fall freely at a constant speed of no more than 8 m/s.

Preferably, a robot arm in a form of a manipulator or a rope winder is connected to the work socket.

Preferably, the control system comprises a wireless communication system known in the state of the art.

Further benefits are obtained, if a wireless communication signal from the wireless communication system is amplified by an independent autonomous unmanned aerial vehicle (UAV) containing a wireless signal amplifier.

Preferably, the power supply system comprises at least two packages, each package comprising at least one electric battery.

In a possible embodiment of the invention the platform and the power supply system are slidably attached to the structure, wherein the platform and the power supply system are mounted on guides protruding beyond the outline of the structure in such a way that the platform is extended in one direction and the power supply system is extended in the opposite direction, and the extension level of the platform and the power supply system is adjusted by means of a worm gear driven by an electric drive connected by wire to the power supply system, in such a way that the degree of extension of the platform is directly proportional to the degree of extension of the power supply system.

Preferably, each skid comprises at least two hydraulic shock absorbers.

### Beneficial effects of the invention

The aircraft according to the invention can replace a helicopter in work on high-voltage lines. It can be controlled either by a pilot on the platform or, optionally, from a station located on the ground. Optionally, the aircraft can be boarded with:
- a human,
- two humans,
- robot/cobot connected to the work socket,
- a human + robot/cobot.

By utilizing a battery-powered power system, it will be possible to charge the aircraft with electricity from renewable energy sources (RES), reducing the carbon footprint of the aircraft's operations.

The control system will enable the aircraft to conduct autonomous, pre-planned flights, as well as flights controlled by a pilot on board the aircraft.

By placing the electric motors and propellers in tunnels, the safety of aircraft operation and maintenance will be increased, especially in the vicinity of high-voltage grids.

By constructing the aircraft structure from the composite materials known in the state of the art, the aircraft's weight is reduced and energy savings are achieved, while maintaining high structural strength parameters.

The use of hydraulic shock absorbers in the skids and the installation of a parachute significantly improve the aircraft's operational safety.

The use of the robotic arm will enable the performance of a specified number of operations in an automated, ultimately autonomous manner, without the need for human presence on the platform. This approach will increase safety by eliminating the need for human presence. The work socket also increases the aircraft's versatility, allowing it to be used in various tasks related to the installation and maintenance of high-voltage power lines in the energy sector.

Thanks to the wireless communication system, it will be possible to remotely control the aircraft, for example, from the station located on the ground. The ground-based control station will enable focus on planned work on the transmission line and will also limit the required qualifications of those on board the aircraft to maintenance tasks only. The person controlling the aircraft will be on the ground and will not be located on the platform. This separation of tasks will also positively impact the energy efficiency of the aircraft's tasks, as there will be no need to carry another load in the air in the form of a pilot. Furthermore, this highly qualified person will be able to perform their duties continuously, without the constraints of legal regulations.

Thanks to the signal amplifier installed on the autonomous UAV, remote control of the aircraft will be possible even in the presence of strong electromagnetic interference, which may be caused by high-voltage lines.

The packages design of the power supply system will facilitate the electric battery replacement during ground maintenance downtime.

By mounting the platform and the power supply system on the guides, ergonomic and easy access to the high-voltage overhead lines will be possible, enabling specific work to be carried out. In this case, the power supply system acts as ballast, stabilizing the aircraft's position when the platform is extended. Thanks to the use of the worm gear, the position of the platform and the power supply system will be fixed and will not shift (even if the aircraft rolls).

### Description of the drawing

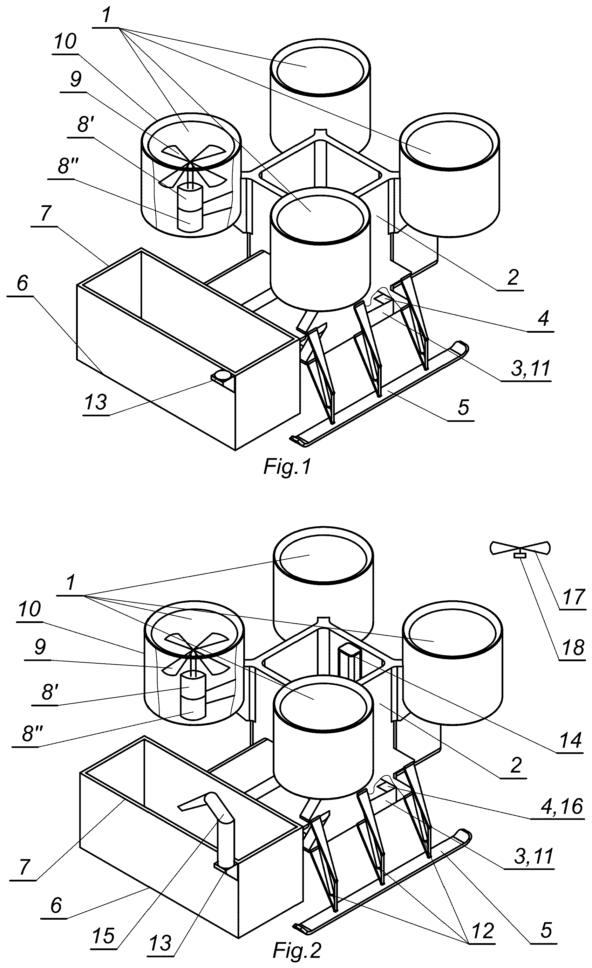

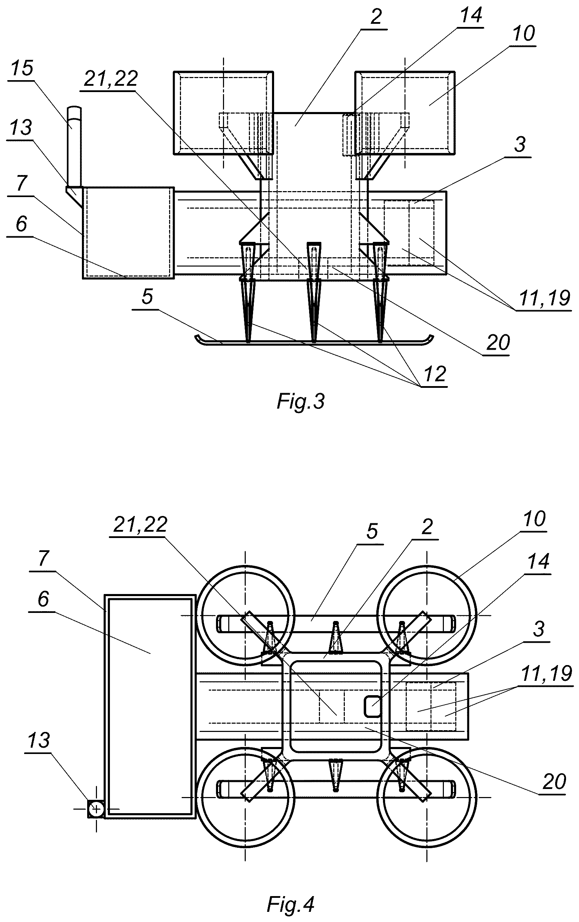

The subject of the invention in two embodiments is shown in the drawing, in figures from Fig. 1 to Fig. 4. Fig. 1 shows the aircraft in the first embodiment in an isometric top view with one propulsion system visible. Fig. 2 shows the aircraft in the second embodiment in an isometric top view with one propulsion system visible. Fig. 3 shows the aircraft in the second embodiment in a side view. Fig. 4 shows the aircraft in the second embodiment in a side view (manipulator not visible).

### Embodiments of the invention

Aircraft in the first embodiment is in a multi-rotor configuration. The aircraft comprises four propulsion systems 1 mounted on the upper side of an aircraft structure 2, a power supply system 3 in the lower part of the structure 2, and a control system 4 connected by wire to the power supply system 3 and by communication with the propulsion systems 1. The structure 2 comprises two skids 5 on the underside. The aircraft comprises a platform 6 attached to the structure 2 on one side. The platform 6 comprises a railing 7 led around the edge of the platform 6. Each propulsion system 1 comprises two electric motors 8 arranged one above the other and each electric motor 8 is connected to a propeller 9. The electric motors 8 with the propellers 9 are mounted in tunnels 10. The electric motors 8 are connected by wire to the power supply system 3. In each of the propulsion system 1, the upper electric motor 8' is counter-rotating to the lower electric motor 8". The power supply system 3 comprises one electric battery 11. A work socket 13 is mounted on the railing 7 and connected by wire to the power supply system 3 and by communication with the control system 4. The diameter of the propellers 9 is equal to 100 cm, the spacing of the propulsion systems 1 is equal to 250 cm, the width of the platform 6 is equal to 250 cm, the depth of the platform 6 is equal to 100 cm, and the weight of the power supply system 3 is equal to 200 kg.

Aircraft in the second embodiment is in a multi-rotor configuration. The aircraft comprises four propulsion systems 1 mounted on the upper side of an aircraft structure 2, a power supply system 3 in the lower part of the structure 2, and a control system 4 connected by wire to the power supply system 3 and by communication with the propulsion systems 1. The control system 4 comprises a wireless communication system 16 in a form of a radio communication system. A wireless communication signal from the wireless communication system 16 is amplified by an independent autonomous unmanned aerial vehicle (UAV) 17 containing a wireless signal amplifier 18. The structure 2 is made of fiberglass. The structure 2 comprises two skids 5 on the underside. The aircraft comprises a platform 6 attached to the structure 2 on one side. The platform 6 comprises a railing 7 led around the edge of the platform 6. Each propulsion system 1 comprises two electric motors 8 arranged one above the other and each electric motor 8 is connected to a propeller 9. The electric motors 8 with the propellers 9 are mounted in tunnels 10. The electric motors 8 are connected by wire to the power supply system 3. In each of the propulsion system 1, the upper electric motor 8' is co-rotating with the lower electric motor 8". The power supply system 3 comprises two packages 19, each package 19 comprising one electric battery 11. Each skid 5 comprises two hydraulic shock absorbers 12. A work socket 13 is mounted on the railing 7 and connected by wire to the power supply system 3 and by communication with the control system 4. A robot arm 15 in a form of a manipulator with three degrees of freedom is connected to the work socket 13. The diameter of the propellers 9 is equal to 150 cm, the spacing of the propulsion systems 1 is equal to 300 cm, the width of the platform 6 is equal to 300 cm, the depth of the platform 6 is equal to 150 cm, and the weight of the power supply system 3 is equal to 300 kg. A parachute 14 is centrally mounted in the upper part of the structure 2, and the canopy size of the parachute 14 is selected in relation to the entire mass of the aircraft in such a way that after its deployment, the parachute 14 enables the aircraft to fall freely at a constant speed of no more than 8 m/s. The platform 6 and the power supply system 3 are slidably attached to the structure 2. The platform 6 and the power supply system 3 are mounted on guides 20 protruding beyond the outline of the structure 2 in such a way that the platform 6 is extended in one direction and the power supply system 3 is extended in the opposite direction. The extension level of the platform 6 and the power supply system 3 is adjusted by means of a worm gear 21 driven by an electric drive 22 connected by wire to the power supply system 3, in such a way that the degree of extension of the platform 6 is directly proportional to the degree of extension of the power supply system 3.

## Claims

1. Aircraft in a multi-rotor configuration, comprises at least four propulsion systems (1) mounted on the upper side of an aircraft structure (2), a power supply system (3) in the lower part of the structure (2), and a control system (4) connected by wire to the power supply system (3) and by communication with the propulsion systems (2), wherein the structure (2) comprises at least two skids (5) on the underside, **characterized in that** the aircraft comprises a platform (6) attached to the structure (2) on one side, wherein the platform (6) comprises a railing (7) led around the edge of the platform (6), and furthermore, each propulsion system (1) comprises two electric motors (8) arranged one above the other and each electric motor (8) is connected to a propeller (9), and the electric motors (8) with the propellers (9) are mounted in tunnels (10), wherein the electric motors (8) are connected by wire to the power supply system (8), and furthermore, the power supply system (3) comprises at least one electric battery (11), wherein a work socket (13) is mounted on the railing (7) and connected by wire to the power supply system (3) and by communication with the control system (4), and the diameter of the propellers (9) is at least 100 cm, the spacing of the propulsion systems (1) is at least 250 cm, the width of the platform (6) is at least 250 cm, the depth of the platform (6) is at least 100 cm, and the weight of the power supply system (3) is at least 200 kg.

2. Aircraft according to the claim 1, **characterized in that** in at least one of the propulsion system (1), the upper electric motor (8') is co-rotating with the lower electric motor (8").

3. Aircraft according to the claim 1 or 2, **characterized in that** in at least one of the propulsion system (1), the upper electric motor (8') is counter-rotating to the lower electric motor (8").

4. Aircraft according to the one of the claim from 1 to 3, **characterized in that** the structure (2) is made of the composite materials known in the state of the art.

5. Aircraft according to the one of the claim from 1 to 4, **characterized in that** a parachute (14) known in the state of the art is centrally mounted in the upper part of the structure (2), and the canopy size of the parachute (14) is selected in relation to the entire mass of the aircraft in such a way that after its deployment, the parachute (14) enables the aircraft to fall freely at a constant speed of no more than 8 m/s.

6. Aircraft according to the one of the claim from 1 to 5, **characterized in that** a robot arm (15) in a form of a manipulator or a rope winder is connected to the work socket (13).

7. Aircraft according to the one of the claim from 1 to 6, **characterized in that** the control system (4) comprises a wireless communication system (16) known in the state of the art.

8. Aircraft according to the claim 7, **characterized in that** a wireless communication signal from the wireless communication system (16) is amplified by an independent autonomous unmanned aerial vehicle (UAV) (17) containing a wireless signal amplifier (18).

9. Aircraft according to the one of the claim from 1 to 8, **characterized in that** the power supply system (3) comprises at least two packages (19), each package (19) comprising at least one electric battery (11).

10. Aircraft according to the one of the claim from 1 to 9, **characterized in that** the platform (6) and the power supply system (3) are slidably attached to the structure (2), wherein the platform (6) and the power supply system (3) are mounted on guides (20) protruding beyond the outline of the structure (2) in such a way that the platform (6) is extended in one direction and the power supply system (3) is extended in the opposite direction, and the extension level of the platform (6) and the power supply system (3) is adjusted by means of a worm gear (21) driven by an electric drive (22) connected by wire to the power supply system (3), in such a way that the degree of extension of the platform (6) is directly proportional to the degree of extension of the power supply system (3).

11. Aircraft according to the one of the claim from 1 to 10, **characterized in that** each skid (5) comprises at least two hydraulic shock absorbers (12).
